# EUROPÄISCHE PATENTSCHRIFT

(11) **EP 2 833 125 B1**
(45) Veröffentlichungstag und Bekanntmachung des Hinweises auf die Patenterteilung: **12.02.2020**
(21) Anmeldenummer: 14179050.1
(22) Anmeldetag: 30.07.2014
(51) Int. Cl.: G01N 23/225, G02B 21/36

(54) **FIB-SEM Array Tomographie**
FIB-SEM array tomography
Tomographie à matrice FIB-SEM

(30) Priorität: 02.08.2013 DE 102013215272
(43) Veröffentlichungstag der Anmeldung: 04.02.2015
(73) Patentinhaber: Carl Zeiss Microscopy GmbH, 07745 Jena (DE); Ruprecht-Karls-Universität Heidelberg, 69047 Heidelberg (DE)
(72) Erfinder: Edelmann, Martin, 73431 Aalen (DE); Dr. Elli, Alexandra F., 73447 Oberkochen (DE); Schertel, Andreas, 73431 Aalen (DE); Schröder, Rasmus, 69118 Heidelberg (DE)
(74) Vertreter: Carl Zeiss AG - Patentabteilung

(56) Entgegenhaltungen:
- WO-A1-2010/136319
- Miriam S. Lucas ET AL: "Bridging Microscopes" In: "Recent Advances in Cytometry, Part A - Instrumentation, Methods", 1. Januar 2012 (2012-01-01), Elsevier, XP055148333, ISSN: 0091-679X ISBN: 978-0-12-374912-3 Bd. 111, Seiten 325-356, DOI: 10.1016/B978-0-12-416026-2.00017-0, * Seite 340, Absatz 1 - Seite 342, Absatz 1 * * Abbildung 6 *
- MARKO M ET AL: "Focused-ion-beam thinning of frozen-hydrated biological specimens for cryo-electron microscopy", NATURE METHODS, NATURE PUBLISHING GROUP, GB, Bd. 4, Nr. 3, 1. März 2007 (2007-03-01), Seiten 215-217, XP008086448, ISSN: 1548-7091, DOI: 10.1038/NMETH1014
- GAVIN E MURPHY ET AL: "Correlative 3D imaging of whole mammalian cells with light and electron microscopy", JOURNAL OF STRUCTURAL BIOLOGY, ACADEMIC PRESS, UNITED STATES, Bd. 176, Nr. 3, 25. August 2011 (2011-08-25), Seiten 268-278, XP028104275, ISSN: 1047-8477, DOI: 10.1016/J.JSB.2011.08.013 [gefunden am 2011-09-01]
- Kristina D. Micheva ET AL: "Array Tomography: A New Tool for Imaging the Molecular Architecture and Ultrastructure of Neural Circuits", Neuron, vol. 55, no. 1, 1 July 2007 (2007-07-01), pages 25-36, XP055530483, US ISSN: 0896-6273, DOI: 10.1016/j.neuron.2007.06.014

## Beschreibung

Die Erfindung betrifft Verfahren und Vorrichtungen zur vergrößerten Abbildung von dreidimensionalen Proben.

In der korrelativen Licht- und Elektronenmikroskopie wird die lichtmikroskopische Abbildung genutzt, um gezielt Probestellen auszusuchen, die nachfolgend im Elektronenmikroskop mit sehr hoher Vergrößerung und Auflösung abgebildet werden sollen. Bei zweidimensionalen Abbildungen lässt sich diese Korrelation durch die Übergabe von 2D-Koordinaten vom Lichtmikroskop zum Elektronenmikroskop erreichen.

Oft ist es jedoch erwünscht, die dreidimensionale Struktur einer Probe zu untersuchen und abzubilden. Dies ist möglich mit Hilfe tomographischer Methoden, bei denen einzelne Ebenen einer dreidimensionalen Probe überlagerungsfrei abgebildet werden. Mit Hilfe einer Serie solcher Schichtbilder lässt sich dann in einer 3D-Rekonstruktion die dreidimensionale Struktur der Probe darstellen.

Die Anwendung der Tomographie in der korrelativen Mikroskopie ist jedoch mit Schwierigkeiten verbunden. Mit einem konfokalen Lichtmikroskop kann zwar von einer dreidimensionalen Probe eine 3D-Abbildung erstellt werden, wenn die Probe optisch transparent ist. Die derart abgebildeten, im Inneren der Probe liegenden Schichten, sind jedoch der Abbildung mittels Elektronenmikroskop nicht zugänglich, da die Probe in der Regel nicht elektronentransparent ist. Daher ist eine Koordinatenübergabe der im Lichtmikroskop gewonnen 3D-Daten an das Elektronenmikroskop mit Schwierigkeiten verbunden und wenig sinnvoll.

Außerdem muss die Probe üblicherweise vor der Beobachtung im Elektronenmikroskop eingebettet werden, um sie vakuumstabil zu machen. Dadurch verändert sich die Probe jedoch so stark in ihrer räumlichen Ausdehnung, dass Probenstellen, die durch dreidimensionale Koordinaten definiert wurden, nicht problemlos wiedergefunden werden können. Außerdem sind meist weitere Präparationsschritte zur Vorbereitung der elektronenmikroskopischen Abbildung nötig, wie beispielsweise die Kontrastierung von biologischen Proben mit Schwermetallen.

Es ist zwar denkbar, die Probe vor der lichtmikroskopischen Untersuchung zu fixieren und einzubetten, so dass sich stabile Koordinaten definieren lassen, die sich zwischen lichtmikroskopischer und elektronenmikroskopischer Beobachtung nicht mehr verändern. Dies hat jedoch zu Folge, dass bereits beim Einbetten eine Schwermetallfärbung vorgenommen werden muss. Dies wiederum hat den Nachteil, dass der Zustand der Probe nicht optimal für die lichtmikroskopische Untersuchung ist, da die lichtoptische Transparenz herabgesetzt und das Probenmaterial für Fluoreszenz-Untersuchungen nicht mehr geeignet ist.

Ein anderer Lösungsansatz ist, die Probe in Serienschnitte zu zerlegen. Die Probe wird von vornherein eingebettet und in elektronentransparente Ultradünnschnitte zerlegt. Dabei sind die Probenschnitte so dünn, dass ihre Strukturen quasi zweidimensional ausgebildet sind. Die erfassten 2D-Koordinaten werden dann vom Lichtmikroskop auf das Elektronenmikroskop übertragen. Eine Übertragung von 3D-Daten findet nicht statt, da sich die Dreidimensionalität der Daten erst durch Verrechnung mehrerer 2D-Datensätze zu einer 3D-Rekonstruktion ergibt. Weitere Nachteile sind, dass hoch-präzise Ultramikrotome mit hochwertigen Diamantmessern benötigt werden und die axiale Auflösung begrenzt wird durch die Schnittdicke, die mit dem verwendeten Ultramikrotom erreicht werden kann. Üblicherweise kann mit Ultramikrotomen eine Schichtdicke von weniger als 50 nm bis 30 nm nicht erreicht werden.

### Kurze Beschreibung des Stands der Technik

Es sind Verfahren bekannt, bei denen eine Probe in Serienschnitte zerlegt wird. Die Probenschnitte werden so auf einem Probenträger abgelegt, dass ihre Reihenfolge in der Schnittserie erhalten bleibt. Zu diesem Zweck werden die Probenschnitte in zusammenhängenden Ketten oder so genannten "Arrays" angeordnet. Anhand der Abbildungen der geordneten Probenschnitte ist es möglich, eine 3D-Rekonstruktion der Probe zu erstellen. Dies ist beispielsweise im Aufsatz von K. Micheva und S. Smith über Array Tomography beschrieben. Nachteilig hieran ist, dass die Probe in ultradünne Scheiben, also Schnitte, deren Dicke maximal etwa 200 nm beträgt, geschnitten werden muss. Außerdem müssen sehr viele oder nahezu alle Probenschnitte abgebildet und auf der Suche nach interessierenden Bereichen durchgemustert werden. Das bedeutet, dass unter großem Zeitaufwand auch zahlreiche Probenschnitte abgebildet und untersucht werden, die keinerlei interessierende Strukturen enthalten.

Bekannt sind auch Methoden der korrelativen Mikroskopie, bei denen durch Übergabe von 2D-Daten die Lage eines interessierenden Bereichs (ROI, region of interest) in einem Mikroskop definiert wird und in einem weiteren Mikroskop wieder angefahren werden kann. Nachteil hierbei ist, dass dies nur für zweidimensionale Daten gelingt, Ultradünnschnitte benötigt werden und die Auflösung in z-Richtung auf die Dicke der Probenschnitte begrenzt ist. Wünschenswert ist dagegen eine Auflösung in z-Richtung von wenigen Nanometern.

Der Aufsatz von M. Lucas et al. (Bridging Microscopes: 3D Correlative Light and Scanning Electron Microscopy of Complex Biological Structures, Methods in Cell Biology, Vol.111, 2012, Chapter 17) betrifft ein Verfahren zur 3D-Korrelation von konfokalem Laserscanningmikroskop (CLSM) und FIB-SEM. Dabei wird zunächst ein einzelner Probenschnitt mit CLSM abgebildet. Dann wird eine korrespondierende Probenregion mit FIB-SEM abgebildet. Anschließend werden die beiden gewonnenen Datensätze miteinander korreliert.

Als Stand der Technik sind folgende Dokumente zu betrachten:
US 2008/0152207A1
WO 2012/080363 A1
Maco B et al. (2013) "Correlative in Vivo 2 Photon and Focused Ion Beam Scanning Electron Microscopy of Cortical Neurons", PLOS ONE, Vol. 8: Issue 2
Robinson, J.M. et al (2001): Correlative Fluorescence and Electron Microscopy on Ultrathin Cryosections: Bridging the resolution Gap, The Journal of Histochemistry & Cytochemistry, 49 (7): 803-803,
K. Micheva und S. Smith (2007) Array Tomography: A New Tool for Imaging the Molecular Architecture and Ultrastructure of Neural Circuits, Neuron 55: 26-36,

### Überblick über die Erfindung

Die vorliegende Erfindung betrifft ein Verfahren zur vergrößerten Abbildung von Proben, eine Vorrichtung zur vergrößerten Abbildung von Proben und ein Computerprogrammprodukt für eine Vorrichtung, die eine Probe vergrößert abbildet. Insbesondere betrifft die vorliegende Erfindung solche Vorrichtungen und Verfahren, bei denen Serienschnitte derart abgebildet werden, dass der Benutzer interessante Volumenbereiche der Probe auswählen kann, um diese Volumenbereiche gezielt mit hoher Auflösung abzubilden und 3D-Rekonstruktionen der Probe oder von Teilen der Probe mit hoher lateraler und axialer Auflösung gezielt herzustellen.

Ein erfindungsgemäßes Verfahren weist die Merkmale des Anspruch 1 auf. Vorteilhafte Ausgestaltungen der Erfindung sind durch die abhängigen Ansprüche gegeben. Außerdem betrifft die Erfindung eine Vorrichtung zur vergrößerten Abbildung von Proben mittels des erfindungsgemäßen Verfahrens sowie ein Computerprogrammprodukt, das wenigstens eine Vorrichtung der vorgenannten Art zur Ausführung des vorgenannten Verfahrens veranlasst.

Um das erfindungsgemäße Verfahren auszuführen, wird die zu untersuchende Probe in eine Serie von Probenschnitten zerlegt. Die Probenschnitte können eine Schnittdicke bis zu mehreren Mikrometern aufweisen und werden so auf einen geeigneten Probenträger abgelegt, dass jederzeit ihre ursprüngliche Lokalisierung in der Probe bekannt ist oder ermittelt werden kann.

Dann werden die Probenschnitte in einer ersten teilchenoptischen Vorrichtung, beispielsweise einem Lichtmikroskop, vergrößert abgebildet. Dazu wird eine senkrecht zur optischen Achse der abbildenden Vorrichtung stehende Ebene (z-Ebene) pro Probenschnitt abgebildet, wobei die Koordinaten für jede abgebildete Ebene ermittelt und zusammen mit dem Bild gespeichert werden. Auf diese Weise werden wenigstens die x- und y-Koordinaten (2D-Koordinaten), bevorzugt die x-, y- und z-Koordinaten (3D-Koordinaten, Raumkoordinaten) für jede abgebildete Ebene ermittelt und derart gespeichert, dass die Koordinaten einer abgebildeten Probenstelle der jeweiligen Abbildung dieser Probenstelle zugeordnet werden können. Das bedeutet also, dass für die in den z-Ebenen abgebildeten Probenstellen Koordinaten ermittelt und gespeichert werden. Zu diesem Zweck kann die Lage der abgebildeten Ebene (z-Ebene) in Bezug auf am Probenträger befindliche Markierungen bestimmt werden. Diese Markierungen dienen zur Referenzierung der Positionen der abgebildeten z-Ebene bei der ersten und weiteren teilchenoptischen Vorrichtungen.

Es ist auch denkbar, pro Probenschnitt mehrere optische Ebenen abzubilden, indem auch Bereiche der Probe, die nicht an der Probenoberfläche, sondern innerhalb des Probenschnittvolumens liegen, abgebildet werden. Mit anderen Worten: Die erste Serie von Probenschnitten kann auch als Serie von optischen Schnitten ausgebildet sein. Dies ist beispielweise möglich, wenn zum vergrößerten Abbilden ein konfokales Lichtmikroskop, bevorzugt ein konfokales Laser-Scanning-Mikroskop verwendet wird. Alternativ kann zum Erstellen und Abbilden der optischen Schnitte auch ein hochauflösendes Lichtmikroskop oder ein lichtoptisches Reflexionsmikoskop oder ein Röntgenmikroskop oder Röntgentomograph verwendet werden.

Wenn nur eine z-Ebene pro Probenschnitt abgebildet wird, bedeutet dies, dass eine 2D-Abbildung des Probenschnitts erzeugt wird. Wenn dagegen mehrere z-Ebenen pro Probenschnitt abgebildet werden - man spricht dann auch davon, dass mehrere "optische Schnitte" (optical sections) erzeugt werden - entspricht dies einer 3D-Abbildung des Probenschnitts.

Aus den 2D- oder 3D-Abbildungen der einzelnen Probenschnitte wird eine dreidimensionale Rekonstruktion der gesamten Probe oder von Teilen der Probe erstellt. Die 3D-Rekonstruktion repräsentiert die abgebildete Probe bzw. den abgebildeten Teil der Probe, wobei die Raumkoordinaten der repräsentierten Probenbereiche jederzeit dem entsprechenden Bereich der 3D-Rekonstruktion zugeordnet werden können. Ebenso können die Bereiche der 3D-Rekonstruktion jederzeit eindeutig den korrespondierenden Stellen in der Probe zugeordnet werden.

In den Daten der 3D-Rekonstruktion wird nun ein interessierendes Volumen (volume of interest, VOI) ausgewählt, das näher untersucht werden sollen. Selbstverständlich können auch mehrere VOIs in der 3D-Rekonstruktion ausgewählt werden.

Alternativ ist es auch möglich, das VOI anhand von 2D- oder 3D-Abbildungen der Probenschnitte auszuwählen, ohne dabei eine 3D-Rekonstruktion zu nutzen. Dazu wird das VOI ausgewählt, indem beispielsweise in einer 2D-Abbildung eines Probenschnitts eine interessierende Region (region of interest, ROI) ausgewählt wird. Alternativ kann die VOI auch in einer 3D-Abbildung eines Probenschnitts ausgewählt werden.

Dann werden die Positions- oder Raumkoordinaten, also die 2D- oder 3D-Koordinaten, des Probevolumens, das vom ausgewählten VOI repräsentiert wird, in eine zweite teilchenoptische Vorrichtung übertragen, mit dem Ziel, nur noch diejenigen Probenschnitte in den nachfolgenden Bildaufnahmeschritten abzubilden, die VOIs oder Teile von VOIs enthalten.

Es ist vorteilhaft, wenn die zweite teilchenoptische Vorrichtung die Probenschnitte mit einer höheren lateralen Auflösung abbilden kann als die erste teilchenoptische Vorrichtung. Besonders vorteilhaft ist es, wenn die laterale Auflösung der zweiten teilchenoptischen Vorrichtung mindestens um den Faktor 5, bevorzugt um den Faktor 10 höher ist als die der ersten teilchenoptischen Vorrichtung.

Die zweite teilchenoptische Vorrichtung kann eine teilchenoptische Vorrichtung sein, die mit geladenen Teilchen arbeitet, beispielsweise ein Rasterelektronenmikroskop (REM, SEM) oder ein FIB-SEM-Kombinationsgerät. Die Grenze der lateralen Auflösung eines Lichtmikroskops beträgt üblicherweise 200 nm, die eines REM 1 nm.

Bei einem Elektronenmikroskop, beispielweise einem Rasterelektronenmikroskop (REM), wird mittels einer Elektronenquelle ein Primärelektronenstrahl erzeugt, der über ein Strahlführungssystem, das typischerweise eine Objektivlinse umfasst, auf die zu untersuchende Probe gelenkt und fokussiert wird. Der Primärelektronenstrahl wird mit einer Ablenkeinrichtung rasterförmig über die Probe gelenkt. Die auf der Probe auftreffenden Primärelektronen treten in Wechselwirkung mit dem Material der Probe, so dass Wechselwirkungsprodukte freigesetzt werden. Diese Wechselwirkungsprodukte können zum Beispiel Sekundärelektronen (SE) oder rückgestreute Elektronen (BSE) sein. Die Wechselwirkungsprodukte werden mit geeigneten Detektoren detektiert und zur Bilderzeugung verwendet. Je nach Art der detektierten Wechselwirkungsprodukte lassen sich Abbildungen mit verschiedenartigen Bildkontrasten erzeugen.

Unter einem FIB-SEM-Kombinationsgerät ist ein Rasterelektronenmikroskop (REM) zu verstehen, das weiterhin eine Ionensäule zum Erzeugen eines fokussierten Ionenstrahls umfasst. In der Ionensäule wird mittels einer Ionenquelle ein Ionenstrahl erzeugt, der auf die Probe gelenkt und fokussiert wird. Mit dem Ionenstrahl kann gezielt Material von der Probe abgetragen oder Material auf der Probenoberfläche abgeschieden werden. Andererseits kann der Ionenstrahl auch dazu eingesetzt werden, detektierbare Wechselwirkungsprodukte aus der Probe frei zu setzen, so dass ein Bild der Probe erzeugt werden kann. Diese Wechselwirkungsprodukte können Sekundärelektronen (SE) sein, aber auch Sekundärionen oder rückgestreute Ionen.

Grundsätzlich lassen sich je nach Art der detektierten Wechselwirkungsprodukte Abbildungen mit verschiedenartigen Bildkontrasten erzeugen. Beispielsweise kann ein Kathodolumineszenz-Detektor zum Detektieren von Lumineszenzsignalen verwendet werden.

Alternativ kann als zweite teilchenoptische Vorrichtung auch ein Ionenkombinationsgerät, beispielsweise ein FIB-HIM-Kombinationsgerät verwendet werden. Unter einem FIB-HIM-Kombinationsgerät ist eine teilchenoptische Vorrichtung zu verstehen, die eine erste Ionensäule zum Erzeugen eines fokussierten Ionenstrahls zum Abbilden einer Probe umfasst, sowie eine zweite Ionensäule zum Erzeugen eines fokussierten Ionenstrahls zum Bearbeiten der Probe. Vorzugsweise werden in der ersten Ionensäule Heliumionen erzeugt und in der zweiten Ionensäule Galliumionen.

Es ist auch denkbar, als zweite teilchenoptische Vorrichtung ein Ionenkombinationsgerät zu verwenden, bei dem in derselben Ionensäule zwei verschiedene Ionenarten, beispielsweise Helium- und Neon-Ionen, erzeugt werden, wobei leichtere Ionen wie Helium-Ionen zur Abbildung und schwerere Ionen wie Neon-Ionen oder Argon-Ionen zur Bearbeitung der Probe genutzt werden.

Um im erfindungsgemäßen Verfahren die Bildaufnahme vorzubereiten, wird das Probenvolumen, das dem ausgewählten VOI entspricht, mittels einer zweiten Schnittserie in Probenschnitte zerlegt. Dabei sind diese Probenschnitte in der Regel wesentlich dünner als die Probenschnitte der ersten Schnittserie. Die Probenschnitte der zweiten Schnittserie können beispielsweise mit einem Ultramikrotom hergestellt werden. Alternativ kann das Probenmaterial schrittweise in dünnen Schichten mit einem fokussierten Ionenstrahl abgetragen werden, so dass schichtweise jeweils eine neue Oberfläche frei gelegt wird.

Jeder Probenschnitt oder jede schichtweise neu frei gelegte Schnittoberfläche wird mittels der zweiten teilchenoptischen Vorrichtung vergrößert abgebildet. Dabei kann die Abbildung mit Hilfe des Elektronenstrahls und/oder Ionenstrahls erfolgen.

In einer besonderen Ausgestaltung des Verfahrens können größere Volumenbereiche abgetragen werden, die nicht als VOI ausgewählt wurden, da sie keine interessierenden Strukturen enthalten. Dabei werden diese Probenschnitte oder schichtweise freigelegten Schnittoberflächen nicht abgebildet. Vielmehr wird mit der Bildaufnahme erst begonnen, wenn ein VOI freigelegt oder annähernd frei gelegt worden ist. Vorteil des erfindungsgemäßen Verfahrens ist, dass die als VOI definierten Volumen gezielt von der teilchenoptischen Vorrichtung angefahren und abgebildet werden können. Das Abbilden von Probenregionen, die keine VOI enthalten, und das Durchmustern von Schnitten auf der Suche nach VOIs sind nicht nötig.

Anhand der Bilder, die von der zweiten Schnittserie aufgenommen werden, kann eine zweite 3D-Rekonstruktion erstellt werden. Diese zweite 3D-Rekonstruktion weist eine höhere laterale Auflösung auf, da die Aufnahmen mit höherer Auflösung in x- und y-Richtung hergestellt werden. Außerdem weist die zweite 3D-Rekonstruktion eine höhere axiale Auflösung auf, da die Schichtdicke der zweiten Schnittserie wesentlich kleiner ist als die der ersten Schnittserie.

Die zweite 3D-Rekonstruktion kann in einem weiteren Schritt mit der ersten 3D-Rekonstruktion überlagert werden. Dadurch entsteht eine korrelative 3D-Rekonstruktion, die die verschiedenen lateralen und axialen Auflösungen der Bilder der ersten und der zweiten Schnittserie kombiniert. Außerdem können die verschiedenartigen Bildkontraste, die mit Hilfe des ersten und der zweiten teilchenoptischen Vorrichtung dargestellt wurden, überlagert werden.

Der vorliegenden Erfindung liegt also ein mehrstufiges, hierarchisches Tomographie-Konzept zugrunde, bei dem zunächst Schichtbilder von Dünnschnitten mit mittlerer Auflösung aufgenommen werden, dann interessierende Volumenbereiche (VOI) in der Probe definiert werden und schließlich gezielt das interessierende Volumen mit hoher lateraler und axialer Auflösung abgebildet und optional rekonstruiert wird. Das bedeutet also, dass man im Laufe des Verfahrens Abbildungen mit immer höherer Auflösung erhält, während andererseits sich die Größe der abgebildeten Probenflächen und Probenvolumen verringert. Dadurch wird der Arbeitsablauf beschleunigt und die zu verarbeitenden Datenmengen werden nicht zu groß, so dass die erhaltenen Daten in der Software bei Visualisierung und Data-Mining leicht handzuhaben sind.

### Ausführungsbeispiele

Ausführungsbeispiele der Erfindung werden nachfolgend anhand von Figuren erläutert.
Figur 1 zeigt ein Flussdiagramm eines erfindungsgemäßen Verfahrens.
Figur 2 zeigt schematisch eine vorteilhafte Ausgestaltung eines Teils des erfindungsgemäßen Verfahrens.
Figur 3 zeigt schematisch eine andere vorteilhafte Ausgestaltung eines Teils des erfindungsgemäßen Verfahrens.
Figur 4 zeigt schematisch den Aufbau einer teilchenoptischen Vorrichtung, die geeignet ist, das erfindungsgemäße Verfahren auszuführen.
Figur 5 zeigt schematisch den Aufbau einer weiteren teilchenoptischen Vorrichtung, die geeignet ist, das erfindungsgemäße Verfahren auszuführen.

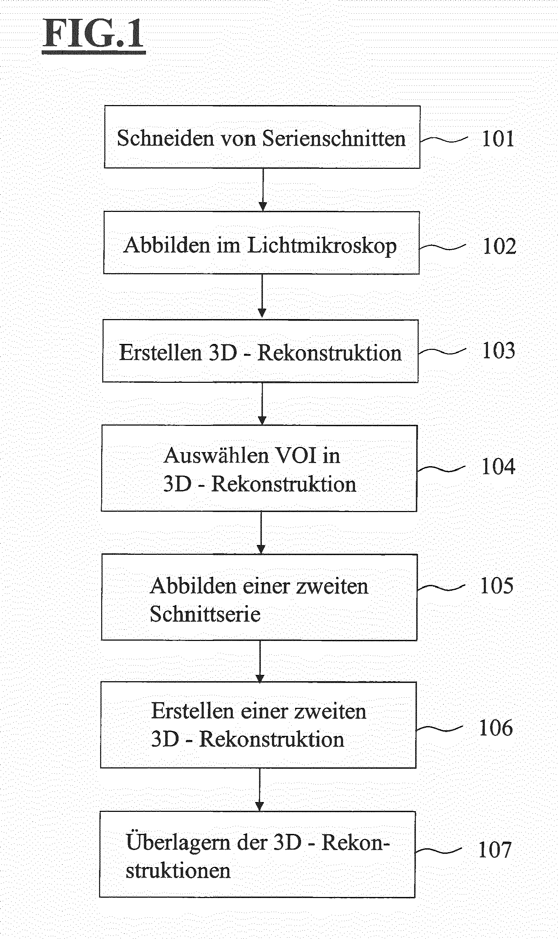

Figur 1 zeigt das erfindungsgemäße Verfahren im Flussdiagramm. In einem ersten Schritt 101 wird die zu untersuchende Probe in eine Serie von Probenschnitten zerlegt. Das Schneiden kann mittels einer geeigneten Schneidevorrichtung, beispielsweise mit einem Schlitten- oder Rotationsmikrotom erfolgen. Hierbei ist es besonders vorteilhaft, die Schnitte automatisiert oder halbautomatisiert herzustellen. Es ist aber auch denkbar, die Serienschnitte per Vibratom, Handmikrotom oder als Freihandschnitte herzustellen.

Vorteilhaft ist hierbei, dass die Probenschnitte eine Schnittdicke von größer als 1 µm bis zu einigen Mikrometern aufweisen können, beispielsweise 20 µm. Je nachdem, welcher Mikroskoptyp nachfolgend zur Aufnahme von vergrößerten Bildern verwendet wird, ist es auch denkbar, dass die Probenschnitte mehr als 20 µm dick sind, beispielsweise 50 µm. Bei Verwendung eines Röntgenmikroskops können die Probenschnitte auch bis zu mehreren Milimeter dick sein. Somit sind die für das Verfahren geeigneten Probenschnitte wesentlich einfacher und zuverlässiger herzustellen als Semidünnschnitte (200 nm - 500 nm Schnittdicke) oder Ultradünnschnitte (30 nm - 200 nm Schnittdicke).

Außerdem ist vorteilhaft, dass die Schnittdicke variieren darf. Für eine 3D-Aufnahme mit einem Lichtmikroskop müssen die Schnitte allerdings für Licht durchlässig sein. Wenn reine 2D-Aufnahmen gewünscht sind, kann die Schnittdicke auch größer sein, da die Schnitte nicht lichttransparent sein müssen. Allerdings sollten die Probenschnitte nicht so dick sein, dass die interessierenden Strukturen vollständig in einem Probenschnitt verborgen bleiben. Andererseits können für das erfindungsgemäße Verfahren auch Ultramikrotom-Schnitte mit sehr geringer Schnittdicke, beispielsweise 50 nm oder 30 nm, verwendet werden.

Die Probenschnitte werden so auf einem geeigneten Probenträger abgelegt, dass rückverfolgt werden kann, wo sie ursprünglich lokalisiert waren. Beispielsweise kann dies durch die Anordnung in einem Array geschehen. Solche Array-Anordungen sind beispielsweise aus der US 2008/0152207 bekannt. Der Probenträger kann mit entsprechenden Markierungen ausgestattet sein, die zur Referenzierung der Positionen des Probenhalters und damit zur Bestimmung der Lage der Probenschnitte bei der Untersuchung in den verwendeten teilchenoptischen Vorrichtungen dienen.

Die zu untersuchende Probe kann beispielsweise eine Gewebeprobe sein, aber auch jede andere Art von Proben ist denkbar. Die Probe kann vorab mit anderen Methoden untersucht werden, beispielsweise mit Weitfeldmikroskopie, Laser-Scanning-Mikroskopie, Röntgenmikroskopie, oder hochauflösender Lichtmikroskopie-Mikroskopie (z.B. 3D-SIM). Die Probe kann vorab chemisch oder mit Kryomethoden fixiert werden. Es hat sich als vorteilhaft erwiesen, wenn die Probe vor Ausführung des erfindungsgemäßen Verfahrens mit geeigneten Methoden eingebettet wird, beispielsweise mit Einbettungsmitteln wie Epoxydharz (Epon), Paraffin oder Methylacrylat, so dass die Probe vakuumstabil und somit für die spätere Untersuchung in der Vakuumkammer eines FIB-SEM-Kombinationsgeräts geeignet ist.

In Schritt 102 des Verfahrens werden die Probenschnitte mit einem Lichtmikroskop vergrößert abgebildet. Dabei kann ein herkömmliches Lichtmikroskop verwendet werden, aber auch ein Lichtmikroskop, mit dem sich Phasenkontrast oder Fluoreszenzkontrast darstellen lassen. Bevorzugt wird zum Abbilden ein konfokales Lichtmikroskop, besonders bevorzugt ein konfokales Laser-Scanning-Mikroskop (LSM) verwendet.

Für jeden interessierenden Probenschnitt wird wenigstens eine z-Ebene abgebildet. Da die Probenschnitte eine gewisse Dicke aufweisen, kann jeder Probenschnitt als dreidimensionaler Block aufgefasst werden, der in z-Richtung (Höhe des Blocks) aus vielen parallel liegenden Ebenen, den z-Ebenen, aufgebaut ist. Jeder Probenschnitt kann also als ein Stapel von übereinander liegenden z-Ebenen verstanden werden.

In einer speziellen Ausführungsform der Erfindung wird pro interessierendem Probenschnitt eine dieser z-Ebenen, beispielsweise die Oberfläche des Probenschnitts, vergrößert abgebildet. Dabei werden die Koordinaten der abgebildeten z-Ebene ermittelt und mit Bezug zum erzeugten Bild gespeichert und zwar so, dass die Koordinaten der abgebildeten Probenstelle der jeweiligen Abbildung dieser Probenstelle zugeordnet werden können. Dann wird die Oberfläche des folgenden Probenschnitts und dann die Oberflächen weiterer, in der Serie folgender Probenschnitte abgebildet und in gleicher Weise gespeichert, so dass man eine Serie von 2D-Abbildungen der Probenschnitte erhält.

In einer anderen Ausführungsform der Erfindung werden pro Probenschnitt mehrere z-Ebenen abgebildet. Dies geschieht bevorzugt mit Hilfe eines konfokalen Laser-Scanning-Mikroskops. Aufgrund des bekannten konfokalen Prinzips können auch z-Ebenen, die innerhalb des Probenblocks liegen, abgebildet werden. Hierbei werden die Raumkoordinaten der jeweils abgebildeten z-Ebene ermittelt und mit Bezug zum korrespondierenden Bild gespeichert. Man erhält also für den Probenschnitt eine Serie von Abbildungen, die in ihrer Gesamtheit eine 3D-Abbildung des Probenschnitts darstellen. Eine solche Abbildungsserie kann nicht nur für einen Probenschnitt, sondern für mehrere Probenschnitte hergestellt werden, so dass man insgesamt eine Serie von 3D-Abbildungen erhält, die zusammen Teile der Probe oder die gesamte Probe repräsentieren. Alternativ kann auch ein Lichtmikroskop mit Apotom-Zusatz eingesetzt werden, mit dem sich ebenfalls 3D-Aufnahmen erzeugen lassen. Ebenso ist die Verwendung von 3D-Röntgenmikroskopen zur Erstellung von 3D-Aufnahmen möglich.

In Schritt 103 wird aus den einzelnen 2D- oder 3D-Aufnahmen, d.h. also anhand der Bilder der Probenschnitte, eine dreidimensionale Rekonstruktion der Probe erstellt. Die 3D-Rekonstruktion repräsentiert die Probe bzw. einen Teil der Probe, wobei die Raumkoordinaten der repräsentierten Probenbereiche jederzeit dem entsprechenden Bereich der 3D-Rekonstruktion zugeordnet werden können.

Wenn die 3D-Rekonstruktion aus 2D-Aufnahmen erstellt wurde, kann eine Auflösung in z-Richtung, also eine axiale Auflösung, erreicht werden, die der Schnittdicke der Probenschnitte entspricht, von beispielsweise 20 µm. Bei 3D-Rekonstruktionen aus 3D-Aufnahmen wird die erreichbare axiale Auslösung bestimmt durch den Abstand von einer abgebildeten z-Ebene zur nächsten abgebildeten z-Ebene. Der Abstand zwischen den abgebildeten z-Ebenen ist üblicherweise kleiner als die Dicke der Schnitte, so dass die Auflösung einer 3D-Rekonstruktion, die aus 3D-Aufnahmen erstellt wurde, in der Regel besser als 20 µm ist. Bei Verwendung eines konfokalen Laser-Scanning-Mikroskops kann die axiale Auflösung der aufgenommenen Bilder bis auf 500 nm reduziert werden.

Es ist auch möglich, in Schritt 102 zunächst ein Vorscreening der Probe mittels 2D-Aufnahmen durchzuführen, um nachfolgend gezielt die interessierenden Bereiche als 3D-Aufnahmen abzubilden. Dies hat den Vorteil, dass die z-Auflösung der in Schritt 103 erstellten 3D-Darstellung der interessierenden Bereiche erhöht wird, ohne dass unter großem Zeitaufwand die gesamte Probe mit dieser hohen z-Auflösung abgebildet werden müsste.

In Schritt 104 wird ein interessierender Volumenbereich (volume of interest, VOI) in der 3D-Rekonstruktion ausgewählt. Selbstverständlich können auch mehrere VOIs in der 3D-Rekonstruktion ausgewählt werden. Dabei kann ein VOI innerhalb eines Probenschnittes liegen oder sich über mehrere Probenschnitte erstrecken. Durch geometrische Berechnungsmethoden lassen sich die ausgewählten VOIs zweidimensionalen Regionen in den jeweiligen Probenschnitten innerhalb der Schnittserie zuordnen. Es ist außerdem möglich, mit den Probenschnitten, die ein VOI enthalten, weitere Präparationsschritte auszuführen, beispielsweise eine Schwermetallfärbung.

In Schritt 105 werden die Raumkoordinaten des Probenvolumens, das vom ausgewählten VOI repräsentiert wird, in eine zweite teilchenoptische Vorrichtung, beispielsweise in ein FIB-SEM-Kombinationsgerät übertragen. Ziel der Übertragung der Raumkoordinaten des ausgewählten Volumens ist, nur diejenigen Probenschnitte mit hoher Auflösung im FIB-SEM-Kombinationsgerät abzubilden, die VOIs oder Teile von VOIs enthalten. Das bedeutet, dass es möglich ist, auch in dreidimensionalen Proben die interessierenden (Volumen)Bereiche schnell und zuverlässig wiederzufinden. Nicht interessierende Volumen können bei der Untersuchung außer Acht gelassen werden, was einen enormen Zeitgewinn mit sich bringt.

Die Übertragung der 2D-Koordinaten erfolgt wie in WO 2012/080363 näher beschrieben. Durch Bezugnahme auf ein vorher definiertes globales Koordinatensystem werden zumindest die x- und y-Koordinaten der abgebildeten Probenstelle, vorteilhafter Weise auch die z-Koordinate (Tiefe) ermittelt, gespeichert und an die zweite teilchenoptische Vorrichtung übermittelt. Es ist vorteilhaft, zur Aufnahme der Probenschnitte spezielle Probenträger, wie beispielsweise in DE 102010052674A1 und WO 2010/130639A1 beschrieben, zu verwenden.

Für das FIB-SEM-Kombinationsgerät werden aus den VOI-Koordinaten zunächst 2D-Koordinaten zum gezielten Anfahren der VOI auf den relevanten Schnitten errechnet. Das bedeutet, dass die errechneten x- und y-Koordinaten als Anfahrkoordinaten für die gesuchte Region in einem automatisierten Prozess eingesetzt werden. Die Übergabe der z-Koordinate ermöglicht zudem die Bestimmung der z-Position (Tiefe) eines VOIs. Somit wird die Lage des VOI innerhalb eines Probenschnitts übermittelt. Außerdem können die Ausmaße jedes VOI, das heißt also Länge, Breite und Höhe des ausgewählten Volumens, übergeben werden.

Um das VOI vergrößert abzubilden, wird eine zweite Serie von Probenschnitten erstellt. Dies geschieht derart, dass dasjenige Probenvolumen, das von dem ausgewählten Volumen in der 3D-Rekonstruktion repräsentiert wird, in dünne Schichten zerteilt wird. Dazu kann ein Ultramikrotom verwendet werden. Vorzugsweise ist das Ultramikrotom miniaturisiert und befindet sich in der Vakuumkammer der teilchenoptischen Vorrichtung. In einer besonders vorteilhaften Ausführungsform ist das Ultramikrotom in die Vakuumkammer eines Rasterelektronenmikroskops (REM) integriert. Wie beim bekannten Serial Block Face Imaging üblich, wird zunächst die Oberfläche des Probenschnitts (block face), der als ein Probenblock aufgefasst werden kann, vergrößert abgebildet. Dann wird mittels des Ultramikrotoms die oberste Probenschicht ultradünn abgetragen. Die nun frei gelegte neue Oberfläche des Probenblocks wird vergrößert abgebildet und wiederum mittels Ultramikrotom abgetragen. Dann wird wieder die neu frei gelegte Ebene abgebildet und so weiter bis man eine Serie von Bildern erhalten hat. Die Abbildung kann mit Hilfe des Elektronenstrahls und/oder des Ionenstrahls erfolgen. Das Abtragen von Probenschnitten mittels Ultramikrotom ist insbesondere dann vorteilhaft, wenn die erste Schnittserie als Serie optischer Schnitte ausgeführt wird, indem beispielsweise die Abbildungen mit einem Röntgentomographen erstellt wird.

Somit erhält man eine Serie von Bildern, in denen verschiedene z-Ebenen des Probenblocks - der einem Probenschnitt der ersten Schnittserie entspricht - dargestellt sind. Der Abstand der z-Ebenen dieser zweiten Schnittserie ist abhängig von der Leistungsfähigkeit des Ultramikrotoms und beträgt üblicherweise etwa 50 nm. Bei einer besonderen Ausgestaltung des Verfahrens beträgt der Abstand der z-Ebenen etwa 15 nm, da das abgetrennte Probenmaterial nicht in Form eines zusammenhängenden Schnittes erhalten bleiben muss, so dass auch eine axiale Auflösung des aufgenommenen z-Bilderstapels von 15 nm erreicht werden kann.

Es ist auch denkbar, Probenmaterial schichtweise durch Bearbeitung mit einem fokussierten Ionenstrahl eines FIB-SEM-Kombinationsgeräts abzutragen. Dabei können Schichten abgetragen werden, die kleiner als 10 nm sind, beispielsweise 5 nm oder 3 nm. Wenn sich aus den Berechnungen ergibt, dass bei der Abtragung ein VOI freigelegt oder angeschnitten wird, wird nach jedem Abtrag ein Bild aufgenommen, beispielsweise durch Abscannen mit dem Elektronenstrahl. Somit ergeben sich für die Abbildung im FIB-SEM-Kombinationsgerät eine axiale Auflösung, die kleiner als 10 nm ist. Beim schichtweisen Abtragen von Probenmaterial im FIB-SEM-Kombinationsgerät wird die jeweilige z-Position der abgebildeten Oberfläche festgehalten, um später eine 3D-Korrelation durchführen zu können.

Vorteilhaft beim Abtragen mit dem Ionenstrahl ist, dass nicht die gesamte Fläche des Probenschnitts abgetragen werden muss. Vielmehr kann der Benutzer als interessierenden Bereich (ROI, region of interest) eine Teilfläche auswählen. Die definierte Teilfläche bildet dann die Grundfläche des abzutragenden Volumens, da gezielt dasjenige Probenmaterial, das sich in dieser Teilfläche und in dem darunter liegenden Volumen befindet, mit dem Ionenstrahl abgetragen wird. In einer bevorzugten Ausführungsform erfolgt das Abtragen mit dem Ionenstrahl, indem der Ionenstrahl senkrecht auf den Probenschnitt auftrifft. In einer anderen bevorzugten Ausführungsform erfolgt das Abtragen mit dem Ionenstrahl, indem der Ionenstrahl parallel zur Längsrichtung des Probenschnitts auf den Probenschnitt auftrifft. In einer weiteren vorteilhaften Ausgestaltung werden die Probenschnitte mittels Elektronenstrahl- oder Ionenstrahlabscheidung mit einer elektrisch leitenden Beschichtung versehen.

In Schritt 106 wird anhand der Bilder, die von der zweiten Schnittserie aufgenommen wurden, eine zweite 3D-Rekonstruktion erstellt. Aufgrund der im FIB-SEM-Kombinationsgerät erreichbaren axialen Auflösung können in der zweiten 3D-Rekonstruktion Voxel mit einer Kantenlänge von 5 nm oder kleiner dargestellt werden.

Optional besteht außerdem mit Schritt 107 die Möglichkeit, die erste und die zweite 3D-Rekonstruktion zu überlagern, also den mit dem Lichtmikroskop aufgenommenen 3D-Datensatz und den mit dem Elektronenmikroskop aufgenommenen 3D-Datensatz zu überlagern. Der dafür nötige Algorithmus wird dadurch wesentlich vereinfacht, dass in z-Richtung durch die Schnittdicke der Semidünnschnitte bereits eine erste Zuordnung vorgegeben ist.

Durch die Überlagerung entsteht eine korrelative 3D-Rekonstruktion, die die verschiedenen lateralen und axialen Auflösungen der Bilder der ersten und der zweiten Schnittserie kombiniert. Außerdem können dadurch verschiedenartigen Bildkontraste, die unterschiedliche Bildinformationen liefern, kombiniert werden. Zum Beispiel können im Lichtmikroskop mittels Fluoreszenzkontrast bestimmte Probestellen spezifisch markiert und abgebildet werden, ohne dass jedoch die Struktur der Probe abgebildet wird. Das elektronenmikroskopische Bild bzw. die elektronenmikroskopische 3D-Rekonstruktion liefert dagegen Informationen über die Ultrastruktur der Probe, jedoch keine Fluoreszenzinformation. Die Überlagerung der 3D-Rekonstruktionen ermöglicht erst die Lokalisierung der markierten Stellen innerhalb der Ultrastruktur der Probe.

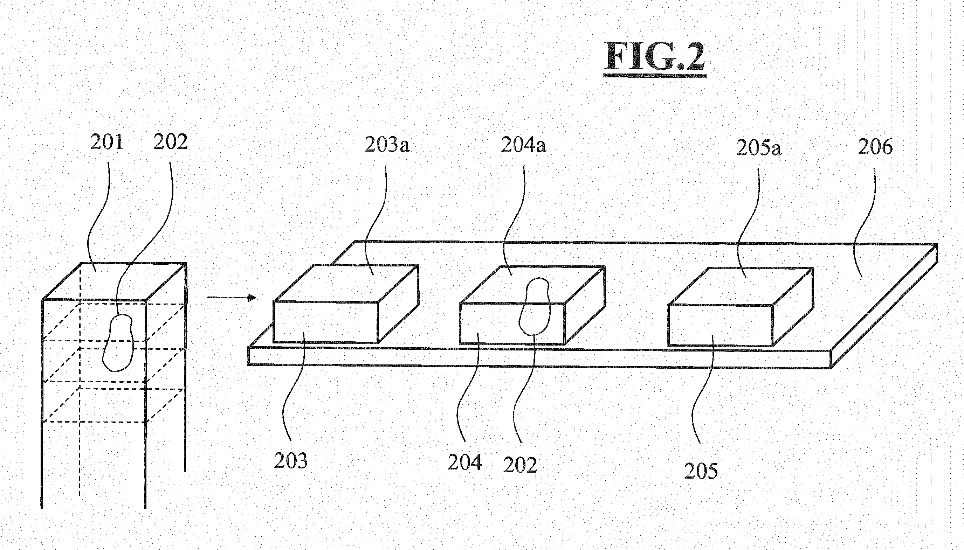

Figur 2 zeigt schematisch eine vorteilhafte Ausgestaltung der verfahrensgemäßen Schritte 101 und 102. Die zu untersuchende Probe 201 enthält in ihrem Inneren eine interessierende Struktur 202. Probe 201 wird in eine Serie von Probenschnitten 203, 204, 205 (hier exemplarisch drei Probenschnitte gezeigt) geschnitten. Die Probenschnitte 203, 204, 205 werden geordnet auf den Probenträger 206 abgelegt und in einer ersten teilchenoptischen Vorrichtung, beispielsweise einem herkömmlichen Lichtmikroskop (nicht dargestellt), vergrößert abgebildet. Dabei wird für jeden Probenschnitt 203, 204, 305 eine z-Ebene 203a, 204a, 205a vergrößert abgebildet. Vorteilhafter Weise ist die abgebildete z-Ebene 203a, 204a, 205a jeweils die frei liegende Oberfläche des Probenschnitts. Anhand der aufgenommenen Bilder die auf einem Bildschirm angezeigt und in einer Auswerte- und Steuereinheit gespeichert werden können, wird im folgenden Verfahrensschritt 103 eine 3D-Rekonstruktion der Probe 201 errechnet.

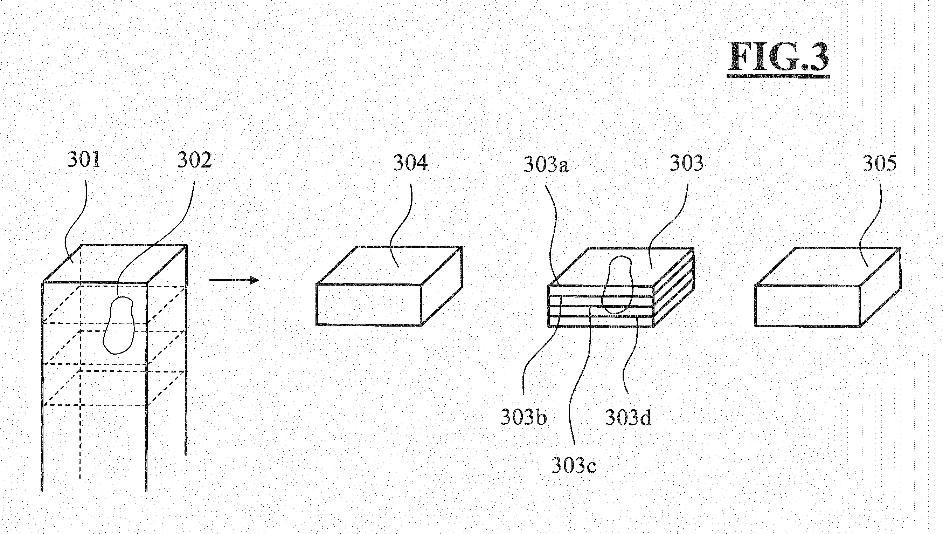

Figur 3 zeigt schematisch eine andere vorteilhafte Ausgestaltung der verfahrensgemäßen Schritte 101 und 102. Auch hier enthält die zu untersuchende Probe 301 in ihrem Inneren eine interessierende Struktur 302. Die Probe 301 wird in eine Serie von Probenschnitten 303, 304, 305 (hier exemplarisch drei Probenschnitte gezeigt) geschnitten. Die Probenschnitte 303, 304, 305 werden in einer ersten teilchenoptischen Vorrichtung, zum Beispiel einem konfokalen Laser-Scanning-Mikroskop (nicht dargestellt), vergrößert abgebildet. Dabei werden für jeden Probenschnitt 303, 304, 305 mehrere z-Ebenen vergrößert abgebildet. Beispielhaft wird das am ersten Probenschnitt 303 mit vier abgebildeten z-Ebenen 303a, 303b, 303c, 303d gezeigt. Es ist selbstverständlich auch möglich, dass eine andere Anzahl von z-Ebenen abgebildet wird. Bei einer typischen Schnittdicke von 20 µm und der mit einem konfokalen Laser-Scanning-Mikroskop üblicherweise erreichbaren axialen Auflösung von 500 nm ergibt sich beispielsweise die Anzahl von 40 z-Ebenen pro Probenschnitt. Auch in diesem Ausführungsbeispiel können die aufgenommenen Bilder auf einem Bildschirm angezeigt und in einer Auswerte- und Steuereinheit gespeichert werden. Im folgenden Verfahrensschritt 103 wird dann anhand der für einen Probeschnitt 303 aufgenommenen Bilderstapel der verschiedenen z-Ebenen 303a, 303b, 303c, 303d eine 3D-Rekonstruktion dieses Probeschnitts 303 erstellt. Alternativ wird anhand der für mehrere Probenschnitte 303, 304, 305 aufgenommenen Bilderstapel eine 3D-Rekonstruktion des untersuchten Teils der Probe oder der gesamten Probe 301 erstellt.

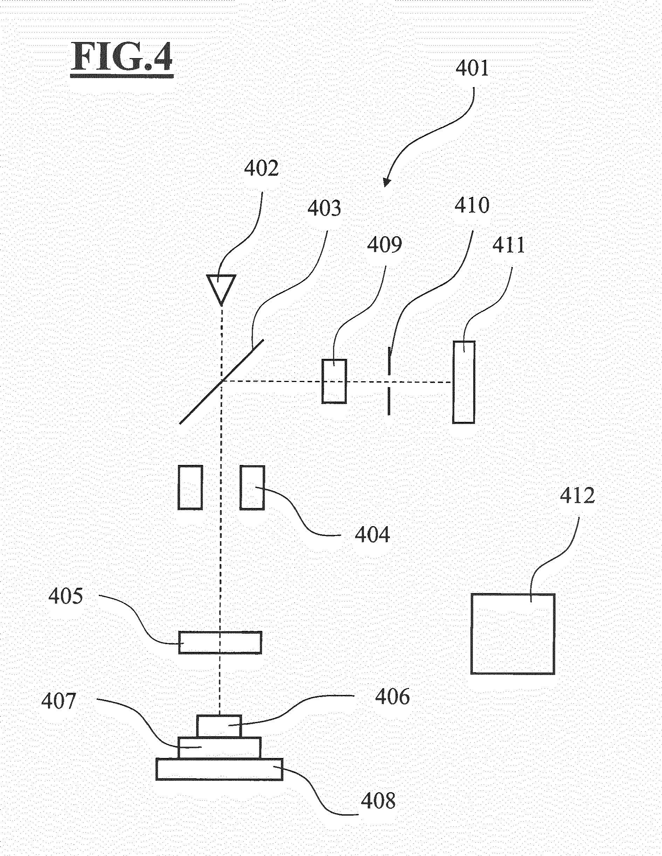

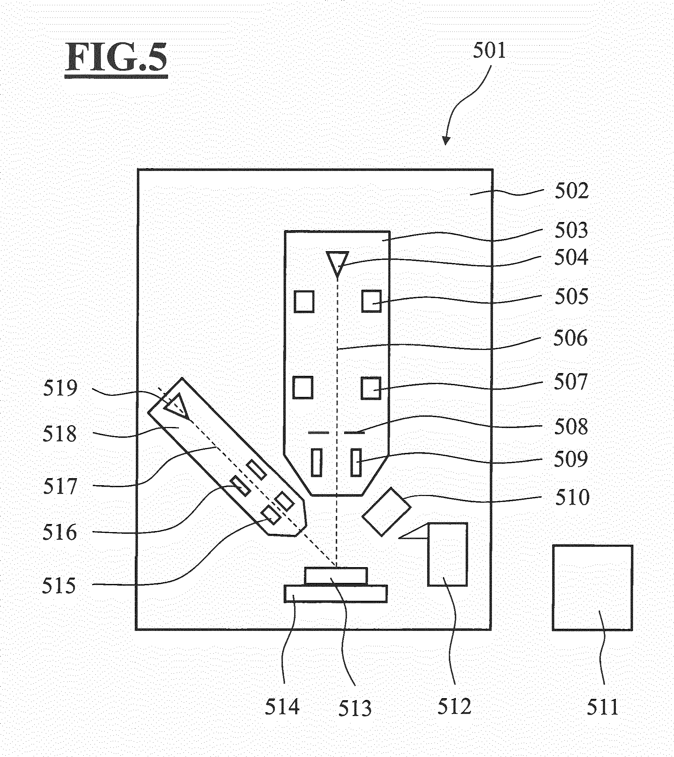

Figuren 4 und 5 zeigen Ausgestaltungen der erfindungsgemäßen Vorrichtung. Die Vorrichtung ist ausgebildet, das in Figur 1 dargestellte Verfahren auszuführen. Die Vorrichtung umfasst eine erste teilchenoptische Vorrichtung und eine zweite teilchenoptische Vorrichtung, wobei die Bestandteile der Vorrichtung eingerichtet sind, das erfindungsgemäße Verfahren auszuführen.

Wie in Figur 4 dargestellt, umfasst die Vorrichtung in einer besonders vorteilhaften Ausgestaltung ein Laser-Scanning-Mikroskop 401 mit einem Probenträger 407, der beispielsweise ein Objektträger sein kann. Der Probenträger 407 ist so ausgebildet, dass er - mitsamt den darauf angeordneten Probenschnitten 406 - in eine zweite teilchenoptische Vorrichtung, beispielsweise ein FIB-SEM-Kombinationsgerät, transferiert werden kann. Der Probenträger 407 ist an einer bewegbaren Probeaufnahme 408 fixiert, so dass der Probenträger 407 durch die von der Auswerte- und Steuereinheit 412 gesteuerten Bewegung der Probenaufnahme 408 in wenigstens x- und y-Richtung verfahren werden kann.

Es hat sich als vorteilhaft erwiesen, wenn die möglichen Positionen der Probenaufnahme 408 inkrementiert sind und die Probenaufnahme 408 so kalibriert ist, dass die Positions- und Winkelkoordinaten auslesbar sind. Besonders vorteilhaft ist es, wenn die Probenaufnahme 408 mit Markierungen zur Positionsbestimmung versehen sind.

Das Laser-Scanning-Mikroskop 401 umfasst eine Lichtquelle 402, die einen Lichtstrahl erzeugt, der über einen Strahlteiler 403 in Richtung auf den Probenschnitt 406 geführt wird. Das Laser-Scanning-Mikroskop 401 umfasst weiterhin ein Objektivsystem 405 zum Fokussieren des Lichtstrahls.

Die von der Probe 406 abgegebenen Wechselwirkungsprodukte werden über einen Strahlteiler 403 und ein Linsensystem 409 auf einen Detektor 411 geleitet. Zwischen dem Linsensystem 409 und dem Detektor 411 befindet sich eine Lochblende 410, die dafür sorgt, dass nur Licht aus einer wählbaren z-Ebene des Probenvolumens vom Detektor 411 detektiert wird. Die Auswerte- und Steuereinheit 412 steuert das Ablenksystem 404, so dass der Laserstrahl über die Probe 406 gerastert wird. Die von der Probe 406 abgegebenen Wechselwirkungsprodukte werden von dem Detektor 411 detektiert und von der Auswerte- und Steuereinheit 412 als Bilddaten dargestellt.

Über die Probenaufnahme 408 wird die momentane Position der Probenaufnahme 408 an die Auswerte- und Steuereinheit 412 übergeben. Die Auswerte- und Steuereinheit 412 verknüpft diese Positionsdaten mit den mittels Laser-Scanning-Mikroskop gleichzeitig aufgenommenen Bilddaten. Das bedeutet also, dass die vergrößerten Abbilder der Probenschnitte zusammen mit den dreidimensionalen Koordinaten der abgebildeten Probenstelle aufgenommen werden. Dazu können spezifische, lokale und globale Koordinatensysteme verwendet werden, wie in der WO 2012/080363 beschrieben.

Figur 5 zeigt schematisch ein FIB-SEM-Kombinationsgerät 501 mit integriertem Ultramikrotom 512. Das FIB-SEM-Kombinationsgerät 501 umfasst eine bewegbare Probenaufnahme 514, auf die der in Figur 4 beschriebene Probenträger transferiert werden kann. Der/die zu untersuchende/n Probenschnitt/e 513 befindet sich auf dem Probenträger in einer Probenkammer 502, in der Vakuumbedingungen herrschen. Die Probenaufnahme 514 ist mit einer Auswerte- und Steuereinheit 511 verbunden, über die die Probenaufnahme 514 wenigstens in den zueinander senkrecht stehenden Raumrichtungen x, y und z verfahrbar ist. Die im Laser-Scanning-Mikroskop erzeugten 3D-Koordinaten der abgebildeten Probenstellen (siehe Figur 4) können mit gängigen Methoden des Datentransfers an diese Auswerte- und Steuereinheit 511 übergeben werden. Nach erfolgter Koordinatenübergabe können durch eine entsprechende Bewegung der Probeaufnahme 514 die im Laser-Scanning-Mikroskop abgebildeten Probenstellen gezielt angefahren werden, so dass diese Stellen der Probe 513 schnell im FIB-SEM-Kombinationsgerät 501 wiedergefunden werden.

Die Probenaufnahme 514 ist vorteilhafter Weise als Fünf-Achsen-Probentisch ausgebildet. Das bedeutet, dass die Probenaufnahme in x-, y- und z-Richtung - also in drei zueinander senkrecht stehenden Raumrichtungen - verfahren, sowie um eine Kippachse und eine Rotationsachse rotiert werden kann, wobei die möglichen Positionen der Probenaufnahme inkrementiert sind. Weiterhin ist die Probenaufnahme kalibriert, so dass die Positions- und Winkelkoordinaten auslesbar sind.

In der Elektronenquelle 504 der Elektronensäule 503 werden Primärelektronen erzeugt, die entlang der optischen Achse 506 der Elektronensäule 503 beschleunigt und durch Linsensysteme 505, 507 gebündelt und durch wenigstens eine Aperturblende 508 beschnitten werden. Außerdem umfasst die Elektronensäule 503 ein Ablenksystem 509, mit dem der Primärelektronenstrahl rasterförmig über die Probe 513 geführt werden kann. Das FIB-SEM-Kombinationsgerät 501 umfasst weiterhin wenigstens einen Detektor 510 zum Detektieren von Wechselwirkungsprodukten.

Das FIB-SEM-Kombinationsgerät 501 umfasst außerdem eine Ionensäule 518 mit einer Ionenquelle 519, einem Ablenksystem 516 und Fokussierlinsen 515. Die in der Ionenquelle 519 erzeugten Ionen werden entlang der optischen Achse 517 der Ionensäule 518 beschleunigt und gebündelt, so dass die Ionen fokussiert auf dem Probenschnitt 513 auftreffen und dazu genutzt werden können, Material des Probenschnitts 513 abzutragen.

Die Erfindung betrifft ferner ein Computerprogrammprodukt, das eine Folge von Steuerbefehlen umfasst, die bei Ausführung durch eine Auswerte- und Steuereinheit 412, 511 die Vorrichtung 401, 501 zur Durchführung des erfindungsgemäßen Verfahrens veranlasst.

Es ist auch denkbar, dass ein erstes Computerprogrammprodukt eine erste Vorrichtung, beispielsweise ein Laser-Scanning-Mikroskop, dazu veranlasst, bestimmte Schritte des erfindungsgemäßen Verfahrens auszuführen und ein zweites Computerprogrammprodukt eine zweite Vorrichtung, beispielsweise ein FIB-SEM-Kombinationsgerät, dazu veranlasst, weitere Schritte des Verfahrens auszuführen. Dabei sind das erste und das zweite Computerprogrammprodukt derart ausgebildet, dass beide Computerprogrammprodukte zusammenwirken können, so dass alle Schritte des erfindungsgemäßen Verfahrens ausgeführt werden können.

In einer vorteilhaften Ausgestaltung sind die erste teilchenoptische Vorrichtung und die zweite teilchenoptische Vorrichtung voneinander verschieden. Es ist auch denkbar, dass die erste und die zweite teilchenoptische Vorrichtung miteinander verbunden sind.

### Bezugszeichenliste

- 101: Schritt: Schneiden einer ersten Serie von Probenschnitten
- 102: Schritt: Abbilden von Serienschnitten im Lichtmikroskop
- 103: Schritt: Erstellen einer 3D-Rekonstruktion
- 104: Schritt: Auswählen eins Volumes of interest (VOI)
- 105: Schritt: Abbilden einer zweiten Serie von Probenschnitten
- 106: Schritt: Erstellen einer zweiten 3-D-Rekonstruktion
- 107: Schritt: Überlagern der 3D-Rekonstruktionen

- 201: Probe
- 202: Interessierende Struktur
- 203: Erster Probenschnitt
- 203a: z-Ebene des ersten Probenschnitts
- 204: Zweiter Probenschnitt
- 204a: z-Ebene des zweiten Probenschnitts
- 205: Dritter Probenschnitt
- 205a: z-Ebene des dritten Probenschnitts
- 206: Probenträger

- 301: Probe
- 302: Interessierende Struktur
- 303: Erster Probenschnitt
- 303a: Erste z-Ebene des Probenschnitts
- 303b: Zweite z-Ebene des Probenschnitts
- 303c: Dritte z-Ebene des Probenschnitts
- 303d: Vierte z-Ebene des Probenschnitts
- 304: Zweiter Probenschnitt
- 305: Dritter Probenschnitt

- 401: Laser-Scanning-Mikroskop
- 402: Lichtquelle
- 403: Strahlteiler
- 404: Ablenksystem
- 405: Objektivsystem
- 406: Probenschnitt
- 407: Probenträger
- 408: Probenaufnahme
- 409: Linsensystem
- 410: Lochblende
- 411: Detektor
- 412: Auswerte- und Steuereinheit

- 501: FIB-SEM-Kombinationsgerät
- 502: Probenkammer
- 503: Elektronensäule
- 504: Elektronenquelle
- 505: Erstes Linsensystem
- 506: Optische Achse der Elektronensäule
- 507: Zweites Linsensystem
- 508: Aperturblende
- 509: Ablenksystem
- 510: Detektor
- 511: Auswerte- und Steuereinheit
- 512: Ultramikrotom
- 513: Probenschnitt
- 514: Probenaufnahme
- 515: Fokussierlinse
- 516: Ablenksystem
- 517: Optische Achse der Ionensäule
- 518: Ionensäule
- 519: Ionenquelle

## Patentansprüche

1. Verfahren zur vergrößerten Abbildung einer Probe (201), umfassend die Schritte:
- Abbilden von Probenschnitten einer Probenschnittserie mittels einer ersten teilchenoptischen Vorrichtung (401), wobei Koordinaten der abgebildeten Probenstelle erfasst und derart gespeichert werden, dass die Koordinaten der abgebildeten Probenstelle der jeweiligen Abbildung dieser Probenstelle zuordenbar sind;
- Auswählen eines interessierenden Volumens (VOI), wobei sich das ausgewählte VOI über mindestens zwei Probenschnitte (203, 204) der Serie von Probenschnitten erstreckt;
- Übertragen der Koordinaten des ausgewählten VOI in eine zweite teilchenoptische Vorrichtung (501);
- Abbilden des ausgewählten VOI mittels der zweiten teilchenoptischen Vorrichtung (501), wobei mehrere Ebenen eines Probenschnitts abgebildet werden, um eine 3D-Abbildung des ausgewählten VOI zu erhalten.

2. Verfahren nach Anspruch 1, wobei das VOI ausgewählt wird, indem in einer Abbildung eines Probenschnitts eine interessierende Region (region of interest, ROI) ausgewählt wird.

3. Verfahren nach Anspruch 1 oder 2, wobei anhand der Bilder der Probenschnitte eine erste 3D-Rekonstruktion erzeugt wird, die die abgebildete Probe repräsentiert und das interessierende Volumen (VOI) in der ersten 3D-Rekonstruktion ausgewählt wird.

4. Verfahren nach einem der Ansprüche 1-3, wobei anhand der 3D-Abbildung des ausgewählten VOI eine zweite 3D-Rekonstruktion erzeugt wird.

5. Verfahren nach Anspruch 4, wobei die erste und die zweite 3D-Rekonstruktion zu einer dritten 3D-Rekonstruktion überlagert werden.

6. Verfahren nach einem der vorangehenden Ansprüche, wobei das Abbilden der Probenschnitte der Probenschnittserie mit einer ersten lateralen Auflösung erfolgt und das Abbilden des ausgewählten VOI mit einer zweiten lateralen Auflösung erfolgt und die erste und die zweite laterale Auflösung voneinander verschieden sind.

7. Verfahren nach Anspruch 6, wobei die zweite laterale Auflösung mindestens um den Faktor 5 höher ist als die erste laterale Auslösung.

8. Verfahren nach einem der Ansprüche 1 - 7, wobei das Abbilden der Probenschnitte der Probenschnittserie mit einem ersten Bildkontrast erfolgt und das Abbilden des ausgewählten VOI mit einem zweiten Bildkontrast erfolgt und der erste und der zweite Bildkontrast voneinander verschieden sind.

9. Verfahren nach einem der Ansprüche 1 - 8, wobei als erste teilchenoptische Vorrichtung (401) ein Laser-Scanning-Mikroskop verwendet wird.

10. Verfahren nach einem der Ansprüche 1 - 8, wobei als erste teilchenoptische Vorrichtung ein Röntgen-Mikroskop verwendet wird.

11. Verfahren nach einem der Ansprüche 1- 10, wobei als zweite teilchenoptische Vorrichtung (501) eine teilchenoptische Vorrichtung verwendet wird, die mit geladenen Teilchen arbeitet,

12. Verfahren nach einem der Ansprüche 1 - 11, wobei als zweite teilchenoptische Vorrichtung (501) ein FIB-SEM-Kombinationsgerät verwendet wird.

13. Verfahren nach einem der Ansprüche 1 - 12, wobei als zweite teilchenoptische Vorrichtung ein Ionenkombinationsgerät verwendet wird.

14. Verfahren nach einem der Ansprüche 1 - 11 oder 13, wobei als zweite teilchenoptische Vorrichtung ein FIB-HIM-Kombinationsgerät verwendet wird.

15. Verfahren nach einem der Ansprüche 1 - 14, wobei die mittels der zweiten teilchenoptischen Vorrichtung (501) abgebildeten Ebenen des Probenschnitts dadurch frei gelegt werden, dass Probenmaterial mit einem Ultramikrotom (512) abgetragen wird.

16. Verfahren nach einem der Ansprüche 1 - 15, wobei die mittels der zweiten teilchenoptischen Vorrichtung (501) abgebildeten Ebenen des Probenschnitts dadurch frei gelegt werden, dass Probenmaterial mit einem Ionenstrahl abgetragen wird.

17. Vorrichtung, umfassend eine erste teilchenoptische Vorrichtung (401) und eine zweite teilchenoptische Vorrichtung (501), wobei die Bestandteile der Vorrichtung eingerichtet sind, das Verfahren nach einem der Ansprüche 1 bis 16 auszuführen.

18. Computerprogrammprodukt, umfassend eine Folge von Steuerbefehlen, die bei Ausführung durch eine Auswerte- und Steuereinheit (412)
- eine Vorrichtung zur Durchführung des Verfahrens nach einem der Ansprüche 1 bis 16 veranlasst oder
- eine erste Vorrichtung dazu veranlasst, wenigstens einen ersten Schritt des Verfahrens auszuführen, wobei das Computerprogrammprodukt eingerichtet ist, mit einem zweiten Computerprogrammprodukt zusammenzuwirken, und das zweite Computerprogrammprodukt eingerichtet ist, eine zweite Vorrichtung zu veranlassen, wenigstens einen zweiten Schritt des Verfahrens auszuführen, so dass alle Schritte des Verfahrens nach einem der Ansprüche 1 bis 16 ausgeführt werden.

## Claims

1. Method for magnified imaging of a sample (201), comprising the steps of:
- imaging sample sections of a sample section series by means of a first particle-optical apparatus (401), wherein coordinates of the imaged sample site are captured and stored in such a way that the coordinates of the imaged sample site are assignable to the respective image of this sample site;
- selecting a volume of interest (VOI), wherein the selected VOI extends over at least two sample sections (203, 204) of the series of sample sections;
- transferring the coordinates of the selected VOI to a second particle-optical apparatus (501);
- imaging the selected VOI by means of the second particle-optical apparatus (501), wherein a plurality of planes of a sample section are imaged in order to obtain a 3D image of the selected VOI.

2. Method according to Claim 1, wherein the VOI is selected by virtue of a region of interest (ROI) being selected in an image of a sample section.

3. Method according to Claim 1 or 2, wherein a first 3D reconstruction is generated on the basis of the images of the sample sections, said 3D reconstruction representing the imaged sample, and the volume of interest (VOI) is selected in the first 3D reconstruction.

4. Method according to any one of Claims 1-3, wherein a second 3D reconstruction is generated on the basis of the 3D image of the selected VOI.

5. Method according to Claim 4, wherein the first and the second 3D reconstruction are overlaid to form a third 3D reconstruction.

6. Method according to any one of the preceding claims, wherein imaging the sample sections of the sample section series is implemented with a first lateral resolution and imaging the selected VOI is implemented with a second lateral resolution and the first and the second lateral resolution differ from one another.

7. Method according to Claim 6, wherein the second lateral resolution is higher than the first lateral resolution by at least a factor of 5.

8. Method according to any one of Claims 1-7, wherein imaging the sample sections of the sample section series is implemented with a first image contrast and imaging the selected VOI is implemented with a second image contrast and the first and second image contrast differ from one another.

9. Method according to any one of Claims 1-8, wherein a laser scanning microscope is used as first particle-optical apparatus (401).

10. Method according to any one of Claims 1-8, wherein an x-ray microscope is used as first particle-optical apparatus (401).

11. Method according to any one of Claims 1-10, wherein a particle-optical apparatus operating with charged particles is used as second particle-optical apparatus (501).

12. Method according to any one of Claims 1-11, wherein an FIB-SEM combination device is used as second particle-optical apparatus (501).

13. Method according to any one of Claims 1-12, wherein an ion combination device is used as second particle-optical apparatus.

14. Method according to any one of Claims 1-11 or 13, wherein an FIB-HIM combination device is used as second particle-optical apparatus.

15. Method according to any one of Claims 1-14, wherein the planes of the sample section imaged by means of the second particle-optical apparatus (501) are exposed by virtue of sample material being ablated by means of an ultra-microtome (512).

16. Method according to any one of Claims 1-15, wherein the planes of the sample section imaged by means of the second particle-optical apparatus (501) are exposed by virtue of sample material being ablated by means of an ion beam.

17. Apparatus, comprising a first particle-optical apparatus (401) and a second particle-optical apparatus (501), wherein the constituent parts of the apparatus are configured to carry out the method according to any one of Claims 1 to 16.

18. Computer program product, comprising a sequence of control commands which, when executed by an evaluation and control unit (412),
- prompt an apparatus to carry out the method according to any one of Claims 1 to 16 or
- prompt a first apparatus to carry out at least one step of the method, wherein the computer program product is configured to interact with a second computer program product and the second computer program product is configured to prompt a second apparatus to carry out at least one second step of the method such that all steps of the method according to any one of Claims 1 to 16 are carried out.

## Revendications

1. Procédé de reproduction agrandie d'un échantillon (201), le procédé comprenant les étapes suivantes :
- reproduire des coupes d'échantillons d'une série de coupe d'échantillons au moyen d'un premier dispositif optique à particules (401), les coordonnées de l'emplacement de l'échantillon reproduit étant détectées et mémorisées de sorte que les coordonnées de l'emplacement de l'échantillon reproduit puissent être associées à la reproduction respective de cet emplacement de l'échantillon ;
- sélectionner un volume d'intérêt (VOI), le VOI sélectionné s'étendant sur au moins deux coupes d'échantillon (203, 204) de la série de coupes d'échantillon ;
- transmettre les coordonnées du VOI sélectionné dans un deuxième dispositif optique à particules (501) ;
- reproduire le VOI sélectionné au moyen du deuxième dispositif optique à particules (501), une pluralité de plans d'une coupe d'échantillon étant reproduite pour obtenir une reproduction 3D du VOI sélectionné.

2. Procédé selon la revendication 1, le VOI étant sélectionné par sélection d'une région d'intérêt (region of interest, ROI) dans une reproduction d'une coupe d'échantillon.

3. Procédé selon la revendication 1 ou 2, une première reconstruction 3D étant générée sur la base des images des coupes d'échantillon, laquelle représente l'échantillon reproduit et le volume d'intérêt (VOI) étant sélectionné dans la première reconstruction 3D.

4. Procédé selon l'une des revendications 1 à 3, une deuxième reconstruction 3D étant générée sur la base de la reproduction 3D du VOI sélectionné.

5. Procédé selon la revendication 4, les première et deuxième reconstructions 3D étant superposées à une troisième reconstruction 3D.

6. Procédé selon l'une des revendications précédentes, la reproduction des coupes d'échantillon de la série de coupes d'échantillon étant effectuée avec une première résolution latérale et la reproduction du VOI sélectionné étant effectuée avec une deuxième résolution latérale et les première et deuxième résolutions latérales étant différentes l'une de l'autre.

7. Procédé selon la revendication 6, la deuxième résolution latérale étant plus élevée d'au moins un facteur 5 que la première résolution latérale.

8. Procédé selon l'une des revendications 1 à 7, la reproduction des coupes d'échantillon de la série de coupes d'échantillon étant effectuée avec un premier contraste d'image, et la reproduction du VOI sélectionné étant effectuée avec un deuxième contraste d'image et les premier et deuxième contrastes d'image étant différents l'un de l'autre.

9. Procédé selon l'une des revendications 1 à 8, le premier dispositif optique à particules (401) utilisé étant un microscope à balayage laser.

10. Procédé selon l'une des revendications 1 à 8, le premier dispositif optique à particules utilisé étant un microscope à rayons X.

11. Procédé selon l'une des revendications 1 à 10, le deuxième dispositif optique à particules (501) utilisé étant un dispositif optique à particules qui fonctionne avec des particules chargées.

12. Procédé selon l'une des revendications 1 à 11, le deuxième dispositif optique à particules (501) utilisé étant un appareil à combinaison FIB-SEM.

13. Procédé selon l'une des revendications 1 à 12, le deuxième dispositif optique à particules utilisé étant un appareil à combinaison d'ions.

14. Procédé selon l'une des revendications 1 à 11 ou 13, le deuxième dispositif optique à particules utilisé étant un appareil à combinaison FIB-HIM.

15. Procédé selon l'une des revendications 1 à 14, les plans de la coupe d'échantillon reproduits par le deuxième dispositif optique à particules (501) étant exposés par retrait du matériau d'échantillon avec un ultra-microtome (512).

16. Procédé selon l'une des revendications 1 à 15, les plans de la coupe d'échantillon reproduits par le deuxième dispositif optique à particules (501) étant exposés par retrait du matériau d'échantillon avec un faisceau d'ions.

17. Dispositif comprenant un premier dispositif optique à particules (401) et un deuxième dispositif optique à particules (501), les composants du dispositif étant conçus pour mettre en œuvre le procédé selon l'une des revendications 1 à 16.

18. Progiciel comprenant une séquence d'instructions de commande qui, lorsqu'elles sont exécutées par une unité d'évaluation et de commande (412),
- ordonne à un dispositif de mettre en œuvre le procédé selon l'une des revendications 1 à 16 ou
- ordonne à un premier dispositif d'exécuter au moins une première étape du procédé, le progiciel étant conçu pour coopérer avec un deuxième progiciel, et le deuxième progiciel étant conçu pour ordonner à un deuxième dispositif d'exécuter au moins une deuxième étape du procédé de sorte que toutes les étapes du procédé selon l'une des revendications 1 à 16 soient exécutées.
